# EUROPÄISCHE PATENTSCHRIFT

(11) **EP 2 436 553 B1**
(45) Veröffentlichungstag und Bekanntmachung des Hinweises auf die Patenterteilung: **15.11.2017**
(21) Anmeldenummer: 11006779.0
(22) Anmeldetag: 19.08.2011
(51) Int. Cl.: B60N 2/14, B60N 2/24, B60N 2/02

(54) **Fahrzeugsitz mit einer Schwenkvorrichtung**
Vehicle seat with a pivoting device
Siège de véhicule doté d'un dispositif de basculement

(30) Priorität: 01.10.2010 DE 102010047337; 19.05.2011 DE 102011102080
(43) Veröffentlichungstag der Anmeldung: 04.04.2012
(73) Patentinhaber: Roland Arnold GmbH & Co. KG, 72539 Pfronstetten-Aichelau (DE)
(72) Erfinder: Arnold, Roland, 72539 Pfronstetten-Aichelau (DE)
(74) Vertreter: Kohler Schmid Möbus Patentanwälte

(56) Entgegenhaltungen:
- EP-A1- 0 985 576
- CN-A- 101 531 151
- FR-A1- 2 828 847
- GB-A- 2 465 877
- JP-A- H09 156 404
- JP-A- 2005 245 836
- US-A1- 2005 179 302
- US-A1- 2006 226 685

## Beschreibung

Die Erfindung betrifft einen Fahrzeugsitz mit einer Schwenkvorrichtung zum Ausschwenken des Fahrzeugsitzes aus einem Fahrzeug und Wiedereinschwenken in das Fahrzeug, wobei der Fahrzeugsitz ein Basiselement, das mit dem Fahrzeug verbindbar ist, ein an dem Basiselement linear geführtes Zwischenelement und ein am Zwischenelement durch ein Drehlager drehbar gelagertes Schwenkelement, an dem ein Sitzteil des Fahrzeugsitzes befestigt ist, aufweist.

Es sind Fahrzeugsitze bekannt, die um eine Achse drehbar und linear bewegbar sind, um körperlich beeinträchtigten Benutzern das Einsteigen und Aussteigen zu erleichtern. Die Linearbewegung und die Drehbewegung erfolgen dabei unabhängig voneinander. Ein solcher Fahrzeugsitz ist beispielsweise aus der DE 31 27 625 A1 bekannt geworden. Der bekannte Fahrzeugsitz kann entlang von Führungsschiehen linear bewegt und um einen Drehzapfen gelagert gedreht werden. Ein körperlich beeinträchtigter Benutzer muss folglich zum Einsteigen in bzw. zum Aussteigen aus dem Fahrzeug sowohl eine Linearbewegung als auch eine Drehbewegung steuern. Dies erfordert einige Übung und ist je nach Behinderungsgrund einer Person oft nur mit fremder Hilfe möglich.

Weiterhin ist aus der US 2005/179302 A1 bekannt geworden, einen Fahrzeugsitz mittels gleichzeitig rotatorisch und transversal zu bewegen.

Die GB 2 465 877 A offenbart einen Fahrzeugsitz, der transversal justierbar ist.

Aus der US 2006/0226685 A1 ist ein verschwenkbarer Sitz für einen Fahrer eines Baustellenfahrzeugs bekannt geworden. Der bekannte Sitz ist sowohl drehbar, höhenverstellbar als auch verschiebbar.

Die FR 2 828 847 A1 offenbart einen Fahrzeugsitz, der um einen Halbkreis verschwenkbar ist.

Die CN 101 531 151 A zeigt einen Fahrzeugsitz, der mittels eines Druckkolbens verschwenkbar ist.

Ein elektrisch schwenkbarer Fahrzeugsitz ist aus der EP 0 985 576 A1 bekannt geworden.

JP 2005 245836 A offenbart einen Fahrzeugsitz, mit einer verschwenkbaren Fußstütze.

Schließlich offenbart die JP H09 156404 A einen zur Tür eines Fahrzeugs hin schwenkbaren Fahrzeugsitz, der einem Passagier das Aussteigen aus dem Fahrzeug erleichtert.

Die Bewegungen der bekannten Fahrzeugsitze sind jedoch nur beschränkt an eine Fahrzeuggeometrie anpassbar.

Der Erfindung liegt daher die Aufgabe zugrunde, einen Fahrzeugsitz bereitzustellen, bei dem ein Aus- bzw. Einschwenken aus bzw. in ein Fahrzeug in Form einer Linearbewegung und einer Drehbewegung durch eine einzige Bewegung des Fahrzeugsitzes ermöglicht wird.

Diese Aufgabe wird erfindungsgemäß durch einen Fahrzeugsitz der eingangs genannten Art gelöst, wobei zwischen dem Basiselement und dem Schwenkelement ein Hebelmechanismus angeordnet ist, mit dem die Linearbewegung zwischen Basiselement und Zwischenelement und die Drehbewegung des Schwenkelements gleichzeitig steuerbar sind, wobei eine Ausschwenkkurve, auf der sich das Schwenkelement beim Ausschwenken aus dem Fahrzeug bewegt, anders als eine Einschwenkkurve, auf der sich das Schwenkelement beim Einschwenken in das Fahrzeug bewegt, verläuft. Im einfachsten Fall kann beispielsweise eine Stange als Hebelmechanismus vorgesehen sein, die jeweils am Basiselement und am Schwenkelement drehbar angeordnet ist. Soll der Fahrzeugsitz nun aus einer Position im Fahrzeug herausgeschwenkt werden, so kann dies auf einfache Art und Weise durch eine Drehung des Schwenkelements relativ zum Zwischenelement erfolgen. Bei der Drehung des Schwenkelements kann durch den Hebelmechanismus eine Linearbewegung des Zwischenelements hervorgerufen werden, an dem das Schwenkelement drehbar angeordnet ist. Eine Drehbewegung des Schwenkelements wird so in eine Überlagerung einer Drehbewegung und einer Linearbewegung übersetzt. Die Linearbewegung kann dabei nötig sein, um den Fahrzeugsitz um ein Hindernis, beispielsweise die B-Säule des Fahrzeugs, herumzuschwenken. Durch den erfindungsgemäßen Fahrzeugsitz wird es somit auch körperlich stark beeinträchtigten Benutzern ermöglicht, ihren Fahrzeugsitz in Form einer einfachen Bewegung aus einem Fahrzeug heraus- oder in dieses hineinzuschwenken.

Zum Verschwenken des Fahrzeugsitzes in einem Fahrzeug ist in der Regel nur wenig Platz vorhanden. Die Schwenkbewegung muss beispielsweise bei einem Vordersitz um die B-Säule des Fahrzeugs herum erfolgen. Gleichzeitig kann der Platz zum Verschwenken des Fahrzeugsitzes durch ein Lenkrad, ein Armaturenbrett oder einen anderen Fahrzeugsitz nach vorne hin beschränkt sein. Der Benutzer soll insbesondere beim Ein- und Ausschwenken des Fahrzeugsitzes nicht mit den Beinen an dem Lenkrad, dem Armaturenbrett oder dem Vordersitz anstoßen. Der Hebelmechanismus ist daher derart ausgebildet, dass eine Ausschwenkkurve des Schwenkelements beim Ausschwenken des Schwenkelements aus dem Fahrzeug anders als eine Einschwenkkurve des Schwenkelements beim Einschwenken des Schwenkelements in das Fahrzeug verläuft. Die Ausschwenkkurve des Schwenkelements kann durch den Hebelmechanismus beispielsweise derart ausgebildet sein, dass das Schwenkelement zuerst ein wenig aus dem Fahrzeug herausgedreht und anschließend von der B-Säule weg verschoben wird. Beim Einschwenken des Schwenkelements kann die Einschwenkkurve hingegen derart ausgebildet sein, dass das Schwenkelement zuerst um die B-Säule herumgedreht wird, das Schwenkelement dann ein Stück nach hinten verfahren wird, damit sich ein Benutzer die Beine nicht am Lenkrad, Armaturenbrett oder Vordersitz anstößt, und das Schwenkelement schließlich vollends in das Fahrzeug eingedreht wird.

Der Hebelmechanismus kann einstellbar ausgebildet sein, sodass durch eine Verschiebung der Längen und Abstände der einzelnen Hebel des Hebelmechanismus zueinander die Aus- und Einschwenkkurven des Schwenkelements optimal auf jedes Fahrzeug angepasst werden können. Der Drehbereich des Schwenkelements ist dabei vorzugsweise zwischen 90° und 120° begrenzbar.

Zumindest ein Hebel des Hebelmechanismus kann ein Langloch aufweisen, in dem ein Bolzen des Hebelmechanismus geführt ist, der am Basiselement, Zwischenelement oder Schwenkelement befestigt ist: Unterschiedliche Aus- und Einschwenkkurven des Schwenkelements können so besonders einfach realisiert werden. Der Hebelmechanismus kann dabei beispielsweise so realisiert werden, dass sich der Bolzen beim Ausschwenken des Schwenkelements an einem ersten Ende des Langlochs dreht, während sich der Bolzen beim Einschwenken des Schwenkelements an einem zweiten Ende des Langlochs dreht. Um eine besonders kompakte Ausführungsform des Hebelmechanismus zu realisieren, kann der Bolzen am Zwischenelement befestigt sein.

Das Langloch kann winkelförmig ausgebildet sein. Der Bolzen kann in diesem Fall beim Ausschwenken des Schwenkelements zuerst in einem ersten Winkelabschnitt und beim Einschwenken in einem zweiten Winkelabschnitt des Langlochs geführt sein. Hierdurch lassen sich auf konstruktiv einfache Weise unterschiedliche Bewegungskurven für das Ein- und Ausschwenken des Fahrzeugsitzes realisieren.

Die beiden Winkelabschnitte des Langlochs können dabei im Wesentlichen senkrecht zueinander verlaufen und gleiche oder unterschiedliche Längen aufweisen.

Durch die Länge eines Winkelabschnitts des Langlochs kann ein linearer Verfahrweg und/oder ein maximaler Drehwinkel des Schwenkelements definiert werden. Um die Schwenkbewegung optimal an das jeweilige Fahrzeug anzupassen, kann daher ein erster Winkelabschnitt des Langlochs kürzer ausgebildet sein als ein zweiter Winkelabschnitt.

Es versteht sich, dass mehrere Langlöcher in dem Hebelmechanismus vorgesehen sein können. Weiterhin kann das zumindest eine Langloch jede beliebige Form, beispielsweise eine Wellenform aufweisen, um die Schwenkbewegungen beim Aus- und Einschwenken des Schwenkelements optimal an das jeweilige Fahrzeug anpassen zu können.

Der Hebelmechanismus kann, insbesondere zwischen dem Basiselement, Zwischenelement und/oder Schwenkelement und einem der Hebel des Hebelmechanismus, zumindest eine Feder aufweisen. Durch die Feder kann der Hebelmechanismus vorgespannt werden. Darüber hinaus kann der Bolzen relativ zum Langloch in eine bestimmte Position des Langlochs bzw. einen bestimmten Abschnitt des Langlochs geschoben werden.

Um eine niedrige Bauform der Schwenkvorrichtung zu erzielen, können das Basiselement, das Zwischenelement und/oder das Schwenkelement im Wesentlichen plattenförmig ausgebildet sein. Elemente, die besonders stark belastet werden, können dabei durch Sicken, Stäbe oder dergleichen verstärkt werden. Durch die niedrige Baufom der Schwenkvorrichtung kann diese so hoch in einem Fahrzeug montiert werden, dass das Schwenkelement beim Ausschwenken aus dem Fahrzeug in jedem Fall über einen Schweller des Fahrzeugs geschwenkt werden kann. Um Gewicht einzusparen, können die Elemente Ausnehmungen aufweisen.

In einem bevorzugten Ausführungsbeispiel der Erfindung kann das Drehlager in einem Eckbereich des Schwenkelements und/oder des Zwischenelements angeordnet sein. Das Schwenkelement kann auf diese Art und Weise weit aus dem Fahrzeug herausgeschwenkt werden.

Soll die Schwenkbewegung des Fahrzeugsitzes elektrisch betätigbar sein, kann im Drehlager vorzugsweise eine Kabelführung vorgesehen sein.

Zusätzlich zur Abstützung des Schwenkelements am Zwischenelement durch das Drehlager kann zwischen Schwenkelement und Zwischenelement eine Kugelabstützung vorgesehen sein. Beispielsweise kann eine Kugel am Schwenkelement oder Zwischenelement gelagert sein, um das Schwenkelement am Zwischenelement abzustützen. Alternativ dazu kann eine Kugel in Führungsbahnen des Schwenkelements und/oder des Zwischenelements geführt sein.

Um die Belastung des Schwenkelements durch das Gewicht des Benutzers an das Fahrzeug ableiten zu können, kann die Schwenkvorrichtung, insbesondere zwischen dem Schwenkelement und dem Zwischenelement, zumindest einen Stützkeil aufweisen. Durch den zumindest einen Stützkeil können ferner Vibrationen der Schwenkvorrichtung während der Fahrt des Fahrzeugs vermindert werden.

Die Schwenkvorrichtung kann in verschiedenen Positionen arretierbar sein. Zur Arretierung der Schwenkvorrichtung kann beispielsweise ein Vorsprung am Basiselement, Zwischenelement und/oder Schwenkelement der Schwenkvorrichtung vorgesehen sein, der in eine Ausnehmung eines weiteren Elements der Schwenkvorrichtung, eingreifen kann. Dabei kann an mehreren Positionen, insbesondere an den Endpositionen, eine Arretierung der Schwenkvorrichtung vorgesehen sein. Der Vorsprung kann dabei durch eine Feder oder ein anderes elastisches Element in eine Ausnehmung gepresst werden, sodass die Schwenkvorrichtung bei Erreichen einer Arretierungsposition automatisch arretiert. Um die Arretierung zu lösen, kann ein Seilzug vorgesehen sein. Der Seilzug kann beispielsweise durch einen dem Benutzer zugänglichen Hebel betätigbar sein.

Die Schwenkvorrichtung des Fahrzeugsitzes kann rein mechanisch bewegbar sein. Beispielsweise kann das Schwenkelement von einem Benutzer durch denselben Hebel verschwenkbar sein, der auch mit einem Seilzug zur Entriegelung der Schwenkvorrichtung versehen ist. Alternativ oder zusätzlich dazu kann ein elektrischer Antrieb der Schwenkvorrichtung vorgesehen sein, bei dem eine Bewegung des Schwenkelements über ein kreisbogenabschnittförmiges, mit einer Verzahnung versehenes Führungselement erfolgt. In die kreisbogenabschnittförmige Verzahnung kann ein Zahnrad, das beispielsweise über ein Getriebe mit einem elektrischen Antrieb verbunden ist, eingreifen. Das Schwenkelement kann auf diese Art und Weise relativ zu dem Zwischenelement mit Hilfe des elektrischen Antriebs gedreht werden. Durch den Hebelmechanismus der Schwenkvorrichtung kann zusätzlich zu der Drehbewegung eine Linearbewegung des Schwenkelements ausgelöst werden.

Die elektrisch angetriebene Schwenkvorrichtung kann eine Führungsvorrichtung zur geräusch- und vibrationsfreien Führung des kreisbogenabschnittförmigen Führungselements aufweisen. Die Führungsvorrichtung weist hierzu vorzugsweise eine Nut zur Führung des kreisbogenabschnittförmigen Führungselements auf. Der Teil der Führungsvorrichtung, der an dem kreisbogenabschnittförmigen Führungselement anliegt, kann aus Polyoxymethylen ausgebildet sein, das besonders gute Gleiteigenschaften aufweist.

Die Steuerung des elektrischen Antriebs der Schwenkvorrichtung kann durch einen Taster erfolgen. Alternativ oder zusätzlich dazu kann der Antrieb über eine Fernbedienung angesteuert werden. Die Steuerung kann dabei den elektrischen Antrieb so lange sperren, bzw. nicht ansteuern, bis ein Signal über eine angezogene Handbremse vorliegt. Hierdurch kann vermieden werden, dass ein Benutzer den elektrischen Antrieb während der Fahrt betätigt.

Die Fernbedienung zur Steuerung des elektrischen Antriebs der Schwenkvorrichtung kann in Form einer Kabelfernbedienung ausgebildet sein. Alternativ dazu kann die Fernbedienung in Form einer Funkfernbedienung, insbesondere in Form eines Schlüsselanhängers, ausgebildet sein.

An dem Fahrzeugsitz kann außerdem eine Fußstütze vorgesehen sein, auf der ein Benutzer seine Füße während des Schwenkvorgangs aufstellen kann. In einem besonders bevorzugten Ausführungsbeispiel der Erfindung kann eine, insbesondere teleskopartig ausziehbare, Fußstütze vorgesehen sein, wobei die Fußstütze gleichzeitig zur Verstellung des Fahrzeugsitzes, insbesondere zur Verstellung der Fahrzeugsitzposition, einsetzbar sein kann. Hierzu kann beispielsweise ein U-förmig gebogenes Rohr, das typischerweise zur Verstellung der Fahrzeugsitzposition in herkömmlichen Fahrzeugen an Fahrzeugsitzen angeordnet ist, teleskopartig verlängerbar sein und so als Fußstütze dienen. Zur Ausbildung der Fußstütze wird vorzugsweise ein Rohr mit 10 - 12 mm Durchmesser eingesetzt.

An der Fußstütze kann zumindest ein Fußstützen-Endanschlag angeordnet sein. Durch den Fußstützen-Endanschlag kann die Fußstütze nicht beliebig weit unter den Fahrzeugsitz verschoben werden. Ein Benutzer kann dadurch jederzeit die Fußstütze erreichen.

Die Schwenkvorrichtung kann zumindest einen Endanschlag aufweisen, wobei die Schwenkvorrichtung durch den zumindest einen Endanschlag nur in einem begrenzten Bereich verschwenkbar ist. Ein Endanschlag kann beispielsweise an der Oberseite des Zwischenelements, d. h. an der dem Schwenkelement zugewandten Seite, ein weiterer Endanschlag an der Unterseite des Schwenkelements, d. h. an der dem Zwischenelement zugewandten Seite, angeordnet sein. Das Schwenkelement ist dadurch vorzugsweise in einem Bereich von 0° bis 110° gegenüber dem Zwischenelement verschwenkbar. Um einen weitestgehend geräuschfreien Anschlag zu ermöglichen, kann zumindest ein Endanschlag aus Polyoxymethylen ausgebildet sein.

Vorzugsweise sind zumindest zwei paarweise miteinander korrespondierende Endanschläge vorgesehen, durch die die Schwenkvorrichtung in einer Endstellung gehalten werden kann. Ein geräuschfreier Anschlag kann dabei durch eine Ausbildung zumindest eines Endanschlags aus Polyoxymethylen erzielt werden. Mittels der Endanschläge kann eine Bewegung der Elemente der Schwenkvorrichtung in der Endposition vermieden werden. Die zueinander korrespondierenden Endanschläge weisen hierzu vorzugsweise eine Nut - Federverbindung auf.

In nicht beanspruchter Ausgestaltung weist der Hebelmechanismus eine Kunststoffhülse auf, mittels der eine Geräuschreduzierung beim Verschwenken der Schwenkvorrichtung in eine Endposition erreicht werden kann. Die Kunststoffhülse ist zur Erzielung guter Gleiteigenschaften vorzugsweise aus Polyoxymethylen gefertigt.

Die Unterseite der Schwenkvorrichtung kann besonders flach ausgebildet werden, indem an das Basiselement angeordnete Teile mittels Senkschrauben montiert werden.

An der Schwenkvorrichtung können in einem Raster angeordnete Bohrungen vorgesehen sein, an denen durch zumindest eine Schraube ein Gurt-Befestigungsteil anordenbar ist. Das Gurt-Befestigungsteil dient dabei der Befestigung von Elementen eines Gurtsystems, durch das sich ein Benutzer auf dem Fahrzeugsitz anschnallen kann. Aufgrund der in einem Raster angeordneten Bohrungen kann das Gurt-Befestigungsteil in unterschiedlichen Positionen an der Schwenkvorrichtung montiert und somit individuell an einen Benutzer angepasst werden.

Um einem Benutzer insbesondere das Aufstehen von dem Fahrzeugsitz zu erleichtern, kann das Sitzteil des Fahrzeugsitzes über mindestens einen Gelenkarm an einem Ende, insbesondere an einem hinteren Ende, anhebbar sein. Dadurch kann nach dem Ausschwenken des Fahrzeugsitzes das hintere Ende des Sitzteils durch den Gelenkarm angehoben werden, sodass das Sitzteil nach vorne geneigt wird und der Benutzer auf einfache Art und Weise absitzen kann. Weiterhin wird eine nicht beanspruchte Schwenkvorrichtung zum begrenzten Verschwenken eines Sitzes dargestellt, mit einem Basiselement, einem an dem Basiselement linear geführten Zwischenelement und mit einem am Zwischenelement durch ein Drehlager drehbar gelagerten Schwenkelement, an dem ein Sitzteil befestigbar ist, wobei zwischen dem Basiselement und dem Schwenkelement ein Hebelmechanismus angeordnet ist, mit dem die Linearbewegung zwischen Basiselement und Zwischenelement und die Drehbewegung des Steuerelements steuerbar sind.

Die nicht beanspruchte Schwenkvorrichtung kann, wie zuvor beschrieben, in jedem Fahrzeug, auch in Kleinwagen befestigt werden. Dabei können diese Fahrzeuge links oder rechts gelenkt sein. Durch einen einfachen Umbau kann die Schwenkvorrichtung von linksschwenkend auf rechtsschwenkend und umgekehrt umgestaltet werden. In einem nicht beanspruchten Ausführungsbeispiel weist der Fahrzeugsitz ein von dem Rückenteil getrenntes und an dem Schwenkelement befestigtes Sitzteil auf. In diesem Fall wird zum Ausschwenken des Benutzers das Sitzteil, nicht aber das Rückenteil verschwenkt. Da das Rückenteil nicht verschwenkt werden muss, kann die Schwenkbewegung des Sitzteils besonders platzsparend erfolgen.

Bei einem unabhängig von dem Rückenteil verschwenkbaren Sitzteil kann an dem Sitzteil und/oder dem an dem Sitzteil befestigten Schwenkelement eine Stütze vorgesehen sein. Die Stütze ist dabei vorteilhafterweise in Form einer Lendenwirbelstütze ausgebildet. Durch die Stütze kann der Benutzer beim Ausschwenken des Sitzteils aus dem Fahrzeug auch ohne das Rückenteil sicher gehalten werden. Ein Kippen des Benutzers nach hinten kann so während des Ausschwenkens vermieden werden. Eine beliebig schwenkbare Schwenkvorrichtung mit an der Schwenkvorrichtung angeordneter, vom Rückenteil unabhängiger Stütze wird als eigenständige Gegenstand betrachtet. Weiterhin wird ein beliebig schwenkbares Sitzteil mit an dem Sitzteil angeordneter, vom Rückenteil unabhängiger Stütze als eigenständige Gegenstand betrachtet. Das Schwenkelement und/oder das Sitzteil können vorzugsweise eine Hubeinrichtung zur Bewegung der Stütze aufweisen. Die Stütze kann dadurch in ihrer Höhe verstellt werden.

Die Hubeinrichtung kann eine Führung zur Führung der Stütze aufweisen. Hierdurch kann die Stütze stabil geführt in ihrer Höhe verstellt werden. Die Führung ist vorzugsweise in Form einer Stangenführung ausgebildet und weist zumindest zwei zueinander bewegbare Stangen auf, wobei eine erste Stange mit der Stütze und eine zweite Stange mit dem Sitzteil und/oder dem Schwenkelement fest oder bewegbar verbunden ist. Die Stangen können mit Kugeln gelagerte Führungen aufweisen, um leicht gegeneinander bewegbar zu sein.

In nicht beanspruchter Ausgestaltung ist die Hubeinrichtung derart ausgebildet, dass die Höhe der Stütze in Abhängigkeit von der Schwenkposition des Sitzteils verändert wird. Hierzu kann die Hubeinrichtung einen Seilzug aufweisen, der einenends mit der Stütze verbunden ist, wobei der Seilzug derart angeordnet ist, dass die Stütze durch eine Bewegung des Schwenkelements bewegt wird. Der Seilzug kann hierzu beispielsweise anderenends an einer Stelle befestigt sein, zu der das Schwenkelement während des Schwenkvorgangs eine Relativbewegung vollzieht. Der Seilzug kann beispielsweise an einer beliebigen Stelle des Fahrzeugs befestigt sein. Durch die Schwenkbewegung entsteht in diesem Fall ein Zug auf die Stütze, sodass diese bewegt wird.

Der Seilzug kann zumindest einfach umgelenkt sein, wobei der Seilzug derart angeordnet ist, dass er im Bereich zwischen der zumindest einen Umlenkung und der Stütze durch eine Bewegung des Schwenkelements verkürzt und die Stütze durch die Verkürzung des Seilzugs bewegt wird. Die Bewegung erfolgt dabei vorzugsweise nach oben und unten, wobei die Stütze mit zunehmendem Schwenkwinkel weiter nach oben gezogen wird. Je weiter das Sitzteil in diesem Fall verschwenkt wird, umso höher wird die Stütze ausgefahren. Die Unterstützung des Benutzers wird dadurch mit zunehmendem Schwenkwinkel erhöht.

Der Seilzug kann anderenends an dem Zwischenelement und/oder dem Basiselement befestigt sein. Hierdurch ergibt sich eine besonders einfache Anordnung der Hubeinrichtung.

Weiterhin kann ein Federelement, insbesondere eine Zugfeder, vorgesehen sein, das einenends mit der Stütze und anderenends mit der Hubeinrichtung und/oder dem Schwenkelement verbunden ist. Die Bewegung der Stütze kann so gegen den Widerstand des Federelements erfolgen. Wird der Seilzug entlastet, wird die Stütze durch das Federelement zurückbewegt. Auch beim Einfahren kann die Stütze eine Zwangsführung durch den Seilzug oder eine besondere Mechanik erfahren.

Nachfolgend wird die Erfindung anhand der Zeichnung näher beschrieben.

Es zeigen:
- Fig. 1a - 1c: eine schematische Darstellung eines erfindungsgemäßen ersten Fahrzeugsitzes beim Ausschwenken aus einem Fahrzeug in zeitlicher Abfolge;
- Fig. 1d - 1f: eine schematische Darstellung des ersten Fahrzeugsitzes aus Fig. 1a - 1c beim Einschwenken in das Fahrzeug in zeitlicher Abfolge;
- Fig. 2a: eine Draufsicht einer zweiten erfindungsgemäßen Schwenkvorrichtung;
- Fig. 2b: eine vergrößerte, schematische Darstellung des Hebelmechanismus der zweiten Schwenkvorrichtung aus Fig. 2a;
- Fig. 3a: eine erste Seitenansicht einer dritten erfindungsgemäßen Schwenkvorrichtung;
- Fig. 3b: eine Draufsicht der dritten Schwenkvorrichtung aus Fig. 3a;
- Fig. 3c: eine zweite Seitenansicht der dritten Schwenkvorrichtung aus Fig. 3a, 3b;
- Fig. 4: eine Draufsicht der dritten Schwenkvorrichtung aus Fig. 3b, in der ein Schwenkteil im Vergleich zur Fig.3b um 30° gedreht ist;
- Fig. 5: die dritte Schwenkvorrichtung gemäß Fig. 3b, wobei das Schwenkteil um 90° gegenüber der Darstellung aus Fig. 3b gedreht ist;
- Fig. 6: eine Draufsicht der dritten Schwenkvorrichtung aus Fig. 3b, wobei das Schwenkteil gegenüber der Darstellung aus Fig. 3b um 110° gedreht ist;
- Fig. 7a: eine Seitenansicht eines Ausschnitt eines erfindungsgemäßen zweiten Fahrzeugsitzes mit zwei Gelenkarmen in einer Grundstellung;
- Fig. 7b: eine Seitenansicht des zweiten Fahrzeugsitzes aus Fig. 7a in einer Absitzstellung;
- Fig. 7c: eine Draufsicht des zweiten Fahrzeugsitzes aus Fig. 7a ohne Rückenteil und Sitzteil;
- Fig. 7d: eine Draufsicht des zweiten Fahrzeugsitzes aus Fig. 7b ohne Rückenteil und Sitzteil;
- Fig. 8a-f: verschiedene perspektivische Darstellungen einer vierten erfindungsgemäßen manuellen Schwenkvorrichtung;
- Fig. 9a, 9b: perspektivische Darstellungen einer fünften erfindungsgemäßen Schwenkvorrichtung mit einem elektrischen Antrieb;
- Fig. 10a: eine schematische Darstellung einer nicht beanspruchten Schwenkvorrichtung mit einer Stütze; und
- Fig. 10b: die nicht beanspruchte Schwenkvorrichtung aus Fig. 10a in einer ausgeschwenkten Position.

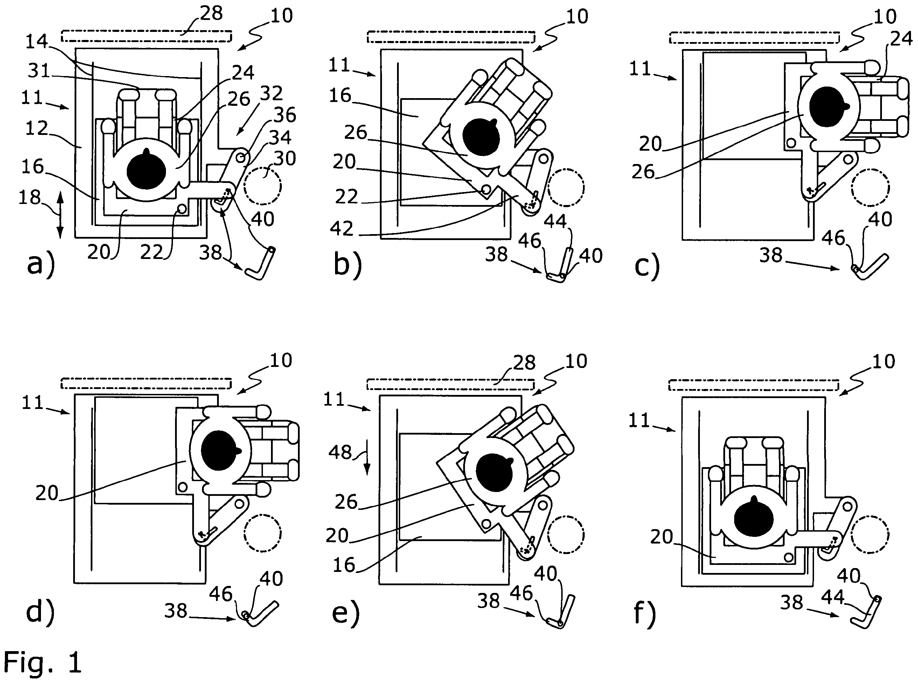

Fig. 1 zeigt schematisch das Ausschwenken (1a - 1c) und Einschwenken (1d - 1f) eines ersten erfindungsgemäßen Fahrzeugsitzes 10, hier eines Beifahrersitzes, durch eine erste Schwenkvorrichtung 11. Gemäß Fig. 1a weist die Schwenkvorrichtung 11 des ersten Fahrzeugsitzes 10 ein plattenförmiges Basiselement 12 mit einer Führung 14 auf. In der Führung 14 des Basiselements 12 ist ein Zwischenelement 16 geführt. Das Zwischenelement 16 ist dadurch in der Lage, Linearbewegungen in Richtung eines Doppelpfeils 18 durchzuführen. Ein Schwenkelement 20 des ersten Fahrzeugsitzes 10 ist über ein Drehlager 22 mit dem Zwischenelement 16 drehbar verbunden. Ein Sitzteil 24 ist wiederum fest mit dem Schwenkteil 20 verbunden. Auf dem Sitzteil 24 ist ein Benutzer 26 angedeutet. Es versteht sich, dass der erfindungsgemäße Fahrzeugsitz 10 und die erfindungsgemäße Schwenkvorrichtung 11 in analoger Art und Weise für Fahrer, d. h. nach links aus einem Fahrzeug ausschwenkend oder für Benutzer im Rückraum des Fahrzeugs ausgelegt werden kann.

Der Benutzer 26 sitzt in Fahrtrichtung des Fahrzeugs, d. h. in Richtung des Doppelpfeils 18. Von dem Fahrzeug sind ein Armaturenbrett 28 und eine B-Säule 30 durch strichpunktierte Linien schematisch dargestellt. Der Benutzer 26 kann auf dem Sitzteil 24 sitzend, aus dem Fahrzeug herausgeschwenkt werden. Der Benutzer 26 kann dabei seine Füße auf einer Fußstütze 31 aufstellen. Die Fußstütze 31 ist teleskopartig in Richtung des Doppelpfeils 18 ein- und ausziehbar. Die Fußstütze 31 dient dabei gleichzeitig zur Verstellung der Position des Sitzteils 24. Beispielsweise kann durch ein Anheben der Fußstütze 31 eine Verrastung des Sitzteils 24 mit dem Schwenkelement 12 gelöst und das Sitzteil 24 in Richtung des Doppelpfeils 18 verstellt werden, um die Position des Sitzteils 24, wie in Fahrzeugen allgemein üblich, an die Beinlänge des Benutzers 26 anzupassen.

Durch einen Hebelmechanismus 32 kann das Schwenkelement 20 um die B-Säule 30 des Fahrzeugs herumgeschwenkt werden, wobei gleichzeitig eine Kollision des Benutzers 26 mit dem Armaturenbrett 28 vermieden werden kann. Ein erster Hebel 34 des Hebelmechanismus 32 ist hierzu über einen Lagerpunkt 36 mit dem Basisteil 12 drehbar verbunden. Ferner weist der erste Hebel 34 ein Langloch 38 auf, in dem ein Bolzen 40 des Schwenkelements 16 geführt ist. Zur besseren Darstellung des Langlochs 38 und des Bolzens 40 ist das Langloch 38 und der Bolzen 40 in Fig. 1 zusätzlich vergrößert außerhalb des ersten Fahrzeugsitzes 10 dargestellt. Das innerhalb des ersten Fahrzeugsitzes 10 dargestellte Langloch 38 und der Bolzen 40 sind nachfolgend in den Fig. 1b - 1f aus Gründen der Übersichtlichkeit nicht mit Bezugsziffern versehen.

Zum Ausschwenken des ersten Fahrzeugsitzes 10 wird in einem ersten Schritt das Schwenkteil 26 des ersten Fahrzeugsitzes 10 gemäß Fig. 1b vom Benutzer 26 oder einer Hilfsperson (nicht gezeigt) um die Drehachse 22 gedreht. Ein zweiter Hebel 42, der fest mit dem Schwenkteil 20 verbunden ist und den Bolzen 40 aufweist, wird in einem ersten Abschnitt 44 des winkelförmig ausgebildeten Langlochs 38 in Richtung eines zweiten Abschnitts 46 des Langlochs 38 bewegt. Das Zwischenelement 16 wird dabei in Fahrzeugrichtung gesehen nach vorne bewegt.

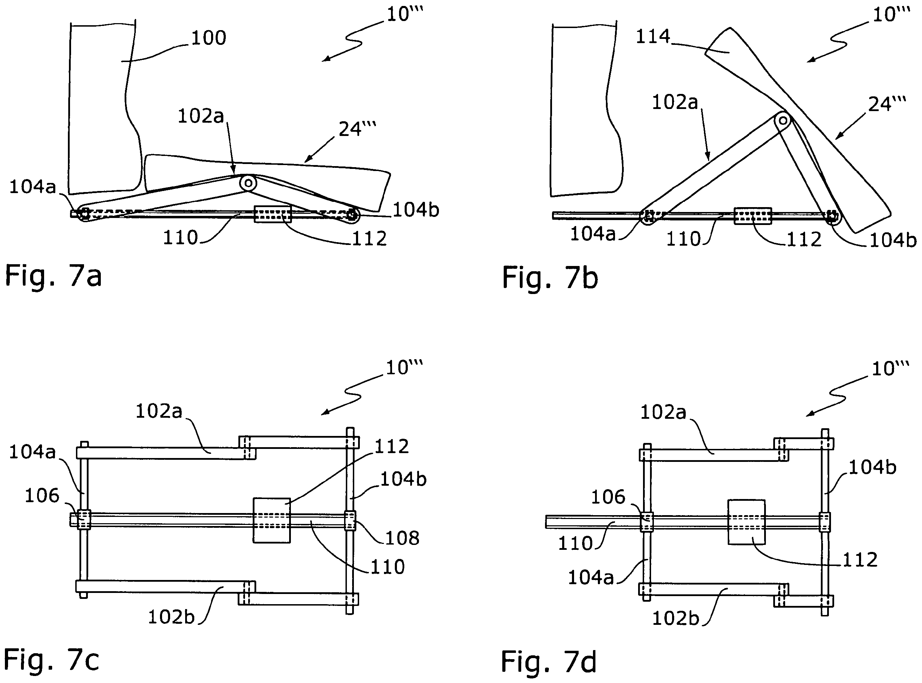

In Fig. 1c ist die Endposition des Schwenkelements 20, d. h. eine Ausstiegsposition, dargestellt. Der Bolzen 40 ist dabei an einem Ende des zweiten Abschnitts 46 des Langlochs 38 angelangt. In der in Fig. 1c dargestellten Endposition kann der Benutzer 26 bequem vom Sitzteil 24 absitzen. Das Sitzteil 24 kann hierzu zusätzlich kippbar, beispielsweise durch in Fig. 7 dargestellte Gelenkarme, ausgestaltet sein.

Die Fig. 1d - 1f zeigen ein Einschwenken des ersten Fahrzeugsitzes 10 in das Fahrzeug. Die in Auszügen in den Fig. 1d - 1f dargestellte Einschwenkkurve des Schwenkelements 20 entspricht dabei nicht der in Fig. 1a - 1c in Auszügen dargestellten Ausschwenkkurve des Schwenkelements 20. Die in Fig. 1d dargestellte Endposition Schwenkelements 20 stellt eine Einstiegsposition für den Benutzer 26 dar. Die Einstiegsposition des ersten Fahrzeugsitzes 10 ist mit dessen Ausstiegsposition aus Fig. 1c identisch.

Beim Einschwenken des Schwenkteils 20 dreht der Bolzen 40 gemäß Fig. 1d zuerst im zweiten Abschnitt 46 des Langlochs 38 bis die in Fig. 1e gezeigte Stellung des Schwenkteils 20 erreicht ist. Das Schwenkteil 20 wird dabei während des Übergangs von der in Fig. 1d gezeigten Position in die in Fig. 1e gezeigten Position nur wenig gedreht. Eine Bewegung des Schwenkteils 20 erfolgt zwischen den zuvor genannten beiden Positionen in erster Linie in Richtung eines Pfeils 48, d. h. das Zwischenteil 20 wird in Richtung des Pfeils 48 bewegt, sodass der Benutzer 26 beim Einschwenken nicht mit dem Armaturenbrett 28 kollidiert.

Anschließend, d. h. von der in Fig. 1e gezeigten Position in die in Fig. 1f gezeigte Position, wird das Schwenkteil 20 in erster Linie gedreht. Dies erfolgt durch ein Verschieben des Bolzens 40 im ersten Abschnitt 44 des Langlochs 38.

Auf die in Fig. 1a - 1f dargestellte Art und Weise kann das Schwenkteil 20 und somit letztlich der Benutzer 26 optimal, d. h. an ein beliebiges Fahrzeug angepasst, aus dem Fahrzeug aus- und in das Fahrzeug eingeschwenkt werden.

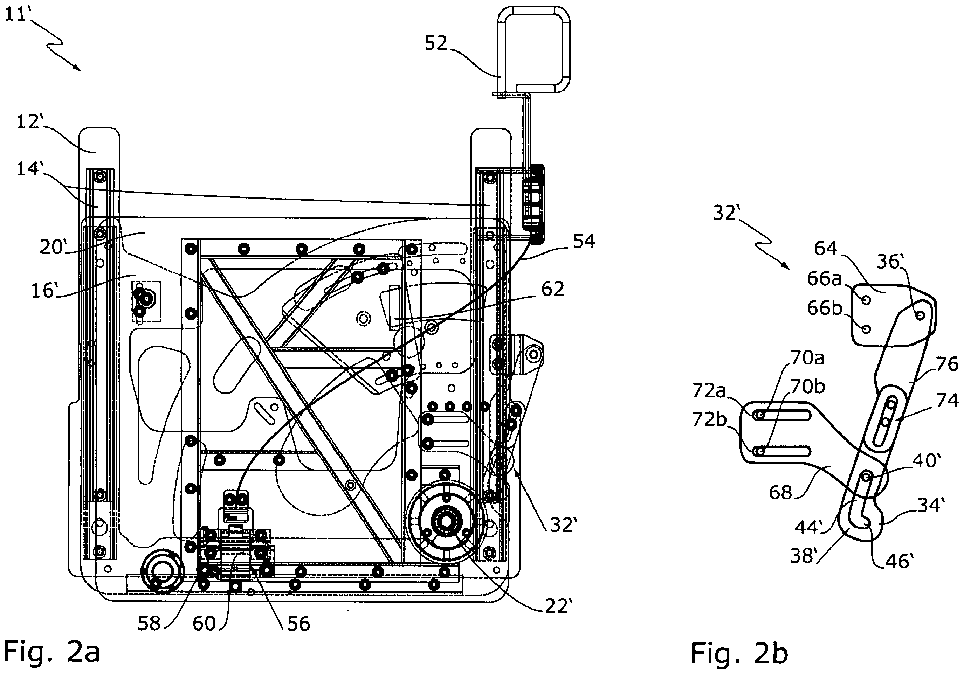

Fig. 2a zeigt ein Ausführungsbeispiel einer zweiten erfindungsgemäßen Schwenkvorrichtung 11'. Die zweite Schwenkvorrichtung 11' stellt eine einfache mechanische Ausführung einer Schwenkvorrichtung dar, die in nahezu jedes Fahrzeug eingebaut werden kann. Die zweite Schwenkvorrichtung 11' weist ein plattenförmiges Basiselement 12' mit einer Führung 14' auf, in der ein Zwischenelement 16' linear bewegbar ist. Über ein Drehlager 22', das als ein flaches Wälzlager mit Kabelführungen ausgebildet ist, ist ein plattenförmig ausgebildetes Schwenkelement 20' drehbar mit dem Zwischenelement 16' verbunden. Zur Steuerung der Linearbewegung zwischen dem Basiselement 12' und dem Zwischenelement 16' sowie der Drehbewegung des Schwenkelements 20' ist ein Hebelmechanismus 32' an der zweiten Schwenkvorrichtung 11' vorgesehen. Ein Benutzer (nicht dargestellt) kann über einen Handhebel 52, der mit dem Schwenkelement 20' verbunden ist, das Schwenkelement 20' und somit ein auf dem Schwenkelement 20' nicht dargestelltes Sitzteil bewegen. Der Handhebel 52 dient gleichzeitig der Betätigung eines Seilzugs 54 der wiederum mit einer Arretiervorrichtung 56 verbunden ist. Die Arretiervorrichtung 56 weist einen Vorsprung 58 auf, der in eine erste Ausnehmung 60 des Basiselements 12' eingreift und so das Schwenkelement 20' an dem Basiselement 12' sichert. Alternativ oder zusätzlich dazu kann der Vorsprung 58 in eine Ausnehmung des Zwischenelements 16' eingreifen. Bei einer Betätigung des Handhebels 52 wird, übertragen durch den Seilzug 54, der Vorsprung 58 aus der ersten Ausnehmung 60 gezogen. Das Schwenkelement 20' kann dann relativ zum Basiselement 12' verschwenkt werden. Das Schwenkelement 20' kann mittels der Arretiervorrichtung 56 an weiteren Positionen an dem Basiselement 12' und oder dem Zwischenelement 16' arretiert werden. In dem dargestellten Ausführungsbeispiel ist hierzu eine zweite Ausnehmung 62 vorgesehen. Aus Gründen der Übersichtlichkeit sind wesentliche Elemente des Hebelmechanismus 32' aus Fig. 2a in Fig. 2b schematisch dargestellt. Eine erste Halteplatte 64 des Hebelmechanismus 32' ist über erste Schrauben 66a, 66b mit dem Basiselement 12' (in Fig. 2b nicht dargestellt) verbunden. Eine zweite Halteplatte 68 ist über zweite Schrauben 70a, 70b, die durch Langlöcher 72a, 72b geführt sind, mit dem (in Fig. 2b nicht dargestellten) Schwenkelement 20' verstellbar verbunden. Der Hebelmechanismus 32' verbindet somit das Basiselement 12' mit dem Schwenkelement 20'.

Über den Hebelmechanismus 32' ist die zweite Schwenkvorrichtung 11' optimal an jedes Fahrzeug anpassbar. Hierzu weist der Hebelmechanismus 32' neben der Einstellmöglichkeit durch die Langlöcher 72a, 72b geführten zweiten Schrauben 70a, 70b einen ersten Hebel 34' auf, dessen Abstand zur ersten Halteplatte 64 über eine Schrauben-Langlochverbindung 74 einstellbar ist. Die Schrauben-Langlochverbindung 74 verbindet dabei den ersten Hebel 34' mit einem zweiten Hebel 76, der über ein Drehlager 36' drehbar an der ersten Halteplatte 64 angeordnet ist. Der erste Hebel 34' weist ein Langloch 38' auf, in dem ein Bolzen 40' geführt ist, der wiederum fest mit der zweiten Halteplatte 68 verbunden ist. Die Wirkungsweise des Hebelmechanismus 32' ist im Wesentlichen analog zur Wirkungsweise des Hebelmechanismus 32 aus Fig. 1. Im Gegensatz zu dem Langloch 38 aus Fig. 1 ist jedoch das Langloch 38' aus Fig. 2b winkelförmig, d. h. vertikal gespiegelt zu dem Langloch 38 ausgebildet. Ein erster Winkelabschnitt 44' des winkelförmig bzw. L-förmig ausgebildeten Langlochs 38' ist dabei länger ausgebildet als ein zweiter Winkelabschnitt 46'. Die ersten und zweiten Winkelabschnitte 44', 46' verlaufen im Wesentlichen senkrecht zueinander.

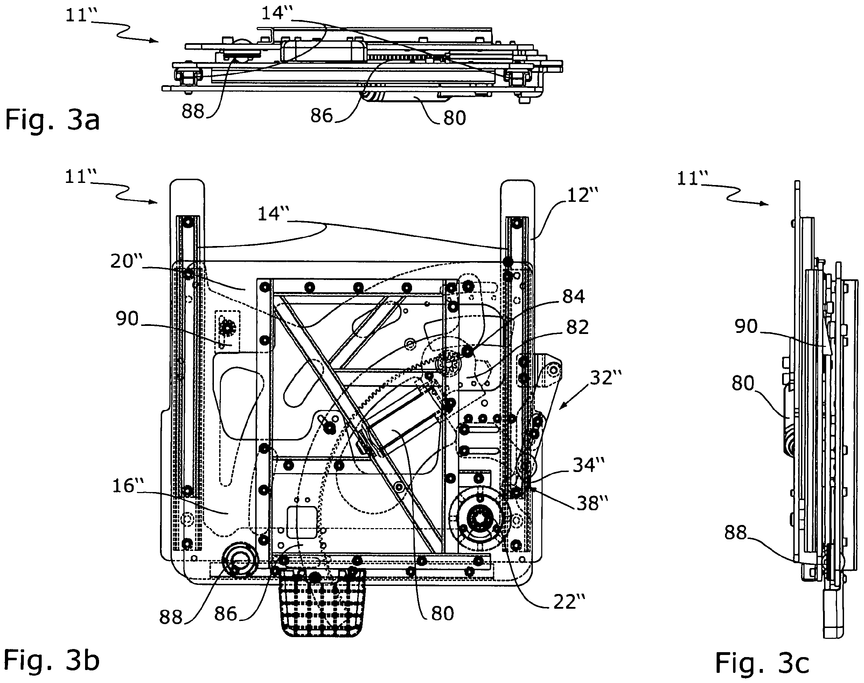

Die Fig. 3a und 3c zeigen Seitenansichten eines Ausführungsbeispiels einer erfindungsgemäßen dritten Schwenkvorrichtung 11", die in Fig. 3b in einer Draufsicht dargestellt ist. Die Fig. 3a - 3c werden im Folgenden gemeinsam beschrieben. Die dritte Schwenkvorrichtung 11" ist im Wesentlichen analog zur zweiten Schwenkvorrichtung 11' gemäß Fig. 2a aufgebaut. Im Gegensatz zur zweiten Schwenkvorrichtung 11' ist die dritte Schwenkvorrichtung 11" elektrisch betreibbar. Hierzu ist ein elektrischer Antrieb 80 vorgesehen, der über ein Getriebe 82, ein Zahnrad 84 antreibt. Das Zahnrad 84 greift in die Verzahnung eines kreisbogenabschnittförmigen Führungselements 86 ein. Ein Schwenkelement 20", das an einem Drehlager 22" gelagert ist, kann bei einer Betätigung des elektrischen Antriebs 80 in einem vom Führungselement 86 vorgegebenen Winkelbereich gedreht werden. Das Schwenkelement 20" stützt sich dabei neben der Abstützung durch das Drehlager 22" durch eine Kugelabstützung 88 an einem Zwischenelement 16" ab. Das Zwischenelement 16" ist wiederum mittels einer Führung 14" in Form einer Schienenführung mit einem Basiselement 12" linear bewegbar verbunden. Das Schwenkelement 20" wird während der Fahrt des Fahrzeugs, d. h. in der in Fig. 3 dargestellten Position, durch die Auflage auf einem Auflaufkeil 90 weiter stabilisiert. Die dritte Schwenkvorrichtung 11" weist einen Hebelmechanismus 32" auf, an dessen ersten Hebel 34" ein Langloch 38" ausgebildet ist. Die Form des Langlochs 38" ist analog zur Form des Langlochs 38 in dem ersten Hebel 34 gemäß Fig. 1 ausgebildet.

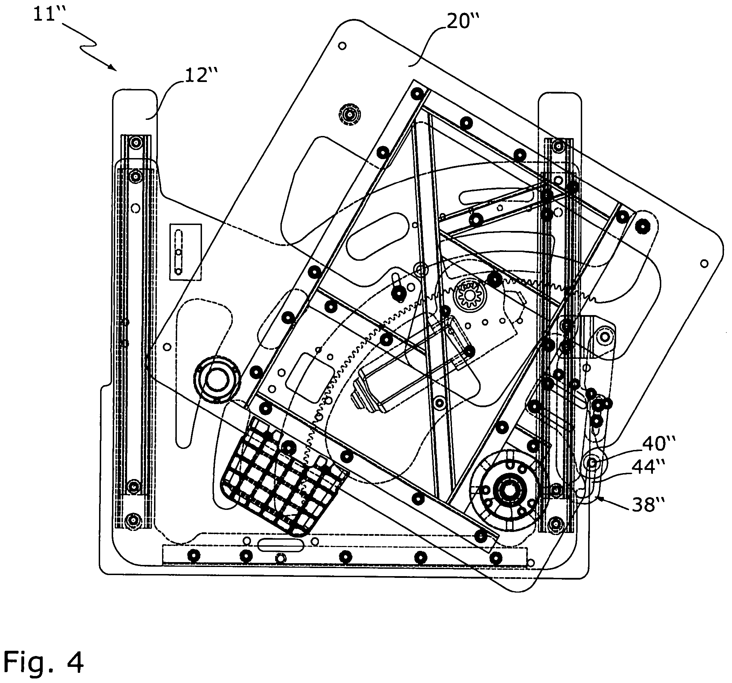

Die Ausschwenkkurve des Schwenkelements 20" ist im Folgenden in Zusammenschau mit den Fig. 4, 5 und 6 beschrieben. In Fig. 4 ist das Schwenkelement 20" zum Basiselement 12" um 30° gedreht dargestellt. Ein Bolzen 40" befindet sich dabei immer noch in einem ersten Abschnitt 44" des Langlochs 38".

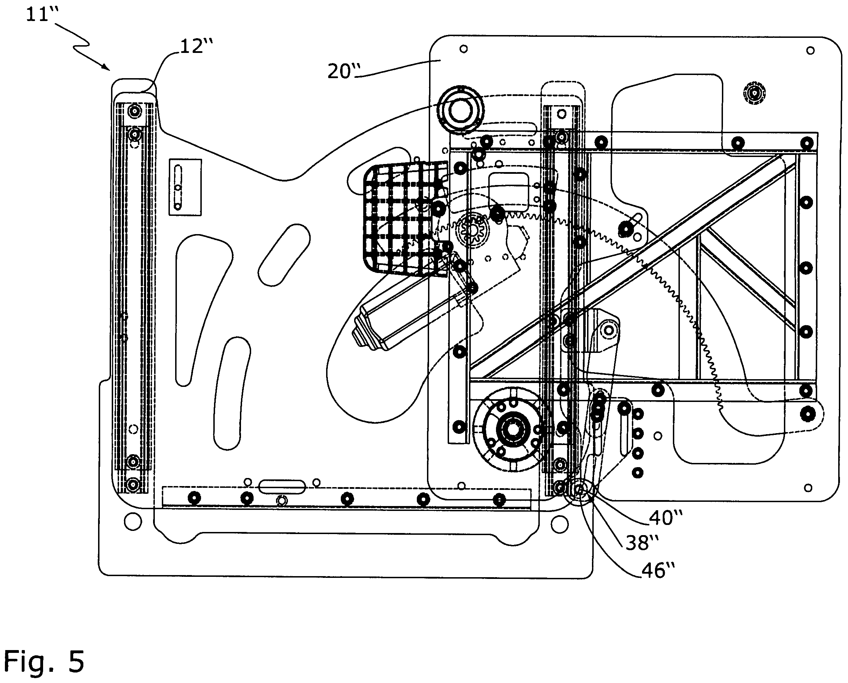

In Fig. 5 ist das Schwenkelement 20" um 90° gegenüber dem Basiselement 12" gedreht. In dieser Position des Schwenkelements 20" befindet sich der Bolzen 40" in einem zweiten Abschnitt 46" des Langlochs 38".

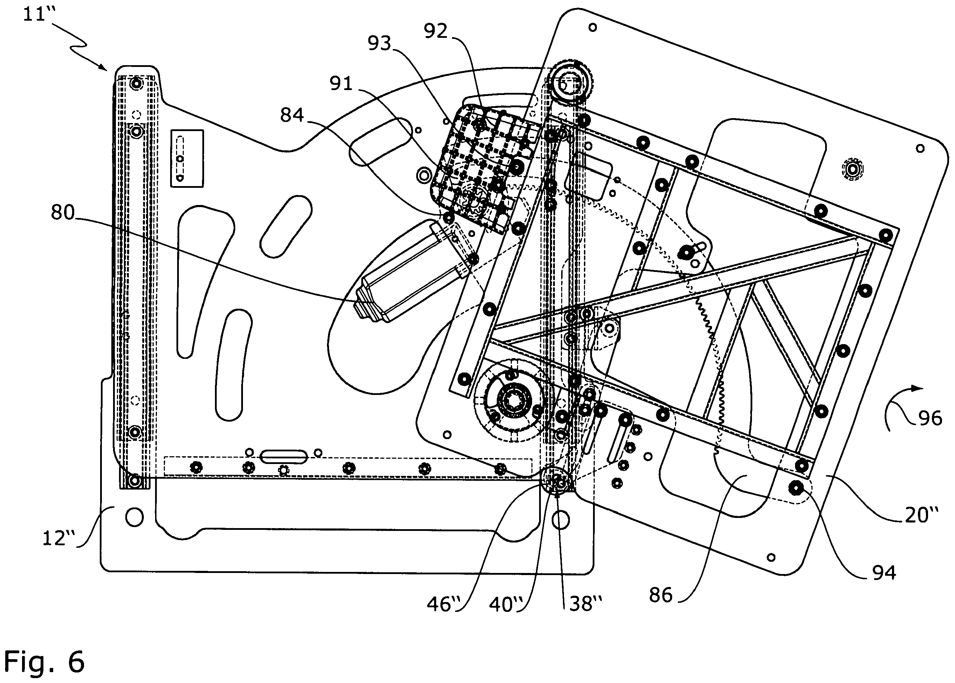

Durch weitere Drehung des Zahnrads 84 erreicht das Zahnrad 84, wie aus Fig. 6 ersichtlich, einen Endpunkt 91 des Führungselements 86. In dieser Stellung ist das Schwenkelement 20" um 110° gegenüber dem Basiselement 12" gedreht. Auch in dieser Position des Schwenkelements 20" befindet sich der Bolzen 40" in dem zweiten Abschnitt 46" des Langlochs 38".

Bei einem Ausfall des elektrischen Antriebs 80 oder bei Wartungsarbeiten an der zweiten Schwenkvorrichtung 11" kann das Schwenkelement 20" manuell zum Basiselement 12" verschoben werden. Hierzu kann eine Schutzkappe 92, die an dem Schwenkelement 20" befestigt ist, abgenommen und ein Verbindungsbolzen 93, der die Zahnstange 86 mit dem Schwenkelement 20" verbindet, gelöst werden. Anschließend kann das an einer Drehschraube 94 gelagerte Führungselement 86 in Richtung eines Pfeils 96 gedreht werden. In diesem Fall greift das Zahnrad 84 nicht mehr in die Verzahnung des Führungselements 86 ein und das Schwenkelement 20" kann manuell verschwenkt werden.

Um einem Benutzer das Aufstehen von einem Sitzteil des Fahrzeugsitzes zu erleichtern, kann an dem Fahrzeugsitz zumindest ein Gelenkarm vorgesehen sein. Fig. 7a zeigt einen Ausschnitt eines derart ausgebildeten zweiten Fahrzeugsitzes 10'" mit einem Rückenteil 100 und einem Sitzteil 24"'. Der zweite Fahrzeugsitz 10"' ist in Fig. 7c ohne das Rückenteil 100 und ohne das Sitzteil 24'" in einer Draufsicht dargestellt. Die Fig. 7a, 7c werden nachfolgend gemeinsam erläutert. Der zweite Fahrzeugsitz 10'" weist zwei Gelenkarme 102a, 102b auf. Die Gelenkarme 102a, 102b sind an ihren Enden durch erste und zweite Stäbe 104a, 104b miteinander verbunden. An dem ersten Stab 104a ist eine Schlossmutter 106, an dem zweiten Stab 104b ein Lager 108 angeordnet. Im Lager 108 ist eine Gewindestange 110 gelagert, auf der die Schlossmutter 106 sitzt. Die Gewindestange 110 kann zum Aufstellen der Gelenkarme 102a, 102b durch einen Motor 112 gedreht werden. Die Fig. 7a, 7c zeigen den zweiten Fahrzeugsitz 10"' in einer Grundstellung, d. h. in einer Stellung, in der ein Benutzer (nicht dargestellt) den zweiten Fahrzeugsitz 10'" während der Fahrt in einem Fahrzeug oder während des Aus- und Einschwenkens benutzt. Das Sitzteil 24"' ist dabei im Wesentlichen waagrecht.

Die Fig. 7b, 7d zeigen den Fahrzeugsitz 10'" in analogen Darstellungen zu den Fig. 7a, 7c in einer Absitzstellung. Ein Benutzer kann in dieser Absitzstellung leichter von dem Sitzteil 24"" absitzen. Um das Sitzteil 24'" von der in Fig. 7a gezeigten Grundstellung in die in Fig. 7b gezeigte Absitzstellung aufzustellen, dreht der Motor 112 die Gewindestange 110. Die Schlossmutter 106 wird dadurch mitsamt dem ersten Stab 104a in Richtung des zweiten Stabes 104b verfahren. Die Gelenkarme 102a, 102b werden dabei aufgerichtet, sodass das Sitzteil 24'" an seinem hinteren Ende 114 angehoben wird. Ein Benutzer kann dann leicht von dem Sitzteil 24'" absitzen.

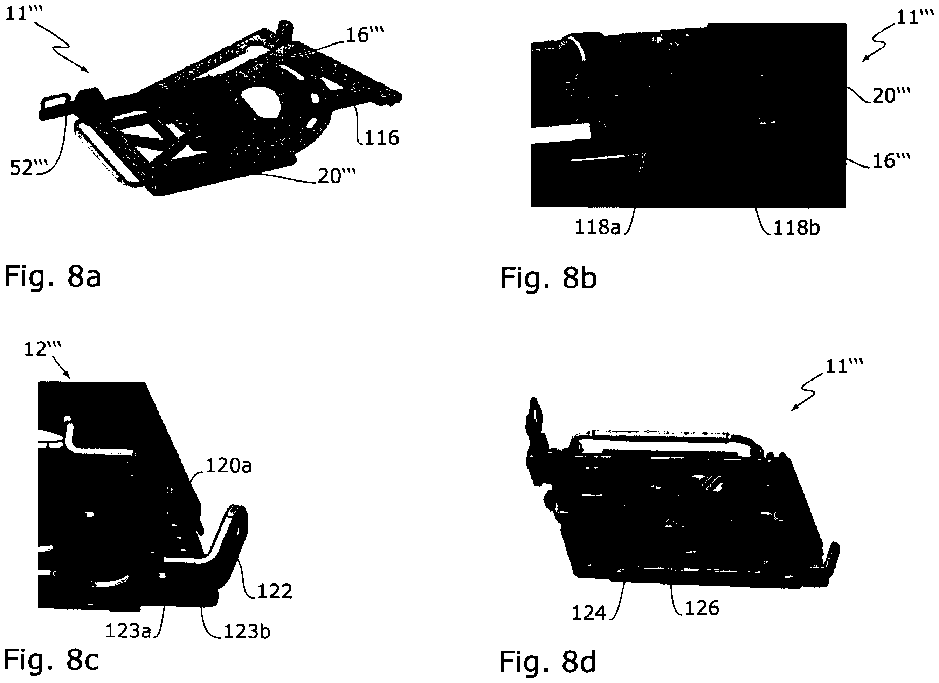

Eine vierte erfindungsgemäße Schwenkvorrichtung 11'" ist in Fig. 8a dargestellt. Die Schwenkvorrichtung 11'" kann von einem Benutzer mittels eines Handhebels 52"' verschwenkt werden. Durch eine Betätigung des Handhebels 52"' kann dabei eine Verriegelung der Elemente der Schwenkvorrichtung 11'" gelöst werden. Der Handhebel 52'" ist weiterhin so stabil ausgebildet, dass ein Verschwenken eines auf einem Schwenkelement 20'" montierten Fahrzeugsitzes mitsamt einem im Fahrzeugsitz sitzenden Benutzer (beide nicht dargestellt) durch Druck oder Zug am Handhebel 52'" möglich ist. Das Schwenkelement 20'" kann gegenüber einem Zwischenelement 16'" um 110° verschwenkt werden. In Fig. 8a ist die um 110° gegenüber dem Zwischenelement 16"' verschwenkte Position des Schwenkelements 20"' dargestellt. Um das Schwenkelement 20"' sicher in den Endpositionen, d. h. in der dargestellten Position und einer nicht verschwenkten Position, halten zu können, sind an der der Oberseite des Zwischenelements 16'" ein erster Endanschlag 116 und zwischen dem Schwenkelement 20"' und dem Zwischenelement 16"' in Fig. 8a nicht sichtbare zweite Endanschläge angeordnet. Der erste Endanschlag 116 ist durch Schrauben verstellbar an dem Zwischenelement 16"' montiert, sodass die Schwenkvorrichtung 11'" optimal an das jeweilige Fahrzeug angepasst werden kann. Die zweiten Endanschläge 118a, 118b sind aus der Teilansicht der Schwenkvorrichtung 11'" gemäß Fig. 8b ersichtlich. Die zweiten Endanschläge 118a, 118b sind an dem Schwenkelement 20"' bzw. dem Zwischenelement 16"' angeordnet und weisen eine Nut-Federverbindung auf.

Fig. 8c zeigt eine Teilansicht eines Basiselements 12'" der Schwenkvorrichtung 11"'. Das Basiselement 12'" weist mehrere in einem Raster angeordnete Bohrungen auf, von denen aus Gründen der Übersichtlichkeit lediglich eine erste Bohrung 120a mit einer Bezugsziffer versehen ist. Ein Gurt-Befestigungsteil 122 ist mittels Schrauben 123a, 123b an den Bohrungen angeordnet. Das Gurt-Befestigungsteil 122 dient der Befestigung von Elementen eines Gurtsystems, insbesondere der Befestigung eines Gurtschlosses. Durch die in einem Raster angeordneten Bohrungen kann das Gurt-Befestigungsteil 122 an das jeweilige Fahrzeug sowie den Fahrer angepasst werden.

Eine vollständige Ansicht der Unterseite der Schwenkvorrichtung 11"' ist in Fig. 8d dargestellt. Die Schwenkvorrichtung 11'" weist eine Einstellschraube 124 auf, die in einem Langloch 126 geführt ist. Durch eine Verschiebung der Einstellschraube 124 in dem Langloch 126 kann der Drehzeitpunkt während des Schwenkvorgangs der Schwenkvorrichtung 11"' eingestellt werden. Da die Einstellschraube 124 von der Unterseite der Schwenkvorrichtung 11"' her zugänglich ist, kann eine Einstellung des Drehzeitpunkts auch bei bereits auf der Schwenkvorrichtung 11'" montiertem Fahrzeugsitz erfolgen.

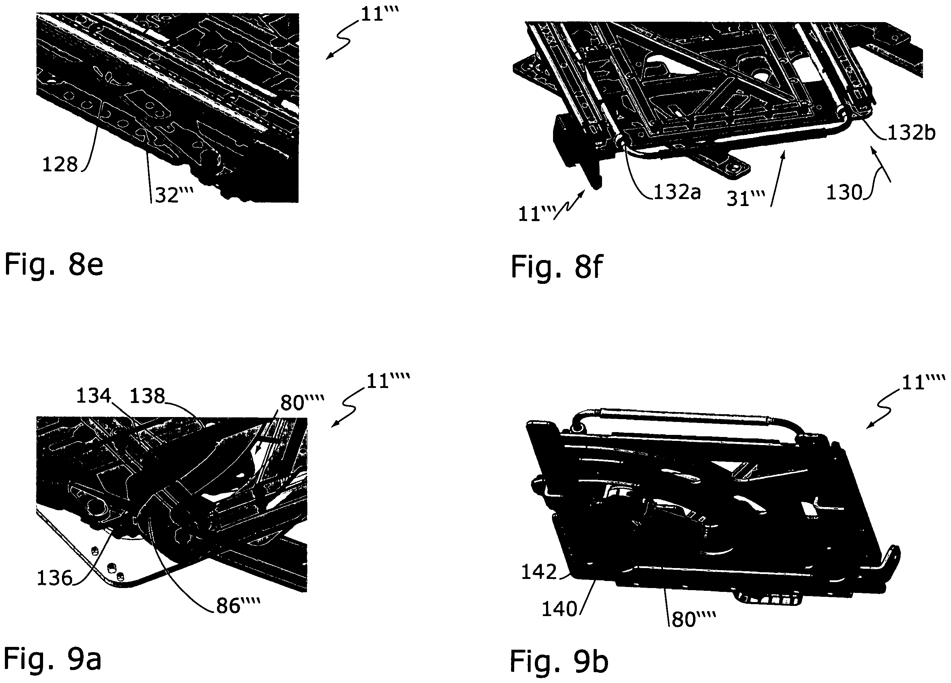

Ein Teil eines Hebelmechanismus 32"' der Schwenkvorrichtung 11'" ist in Fig. 8e dargestellt. Der Hebelmechanismus 32'" weist eine Kunststoffhülse 128 auf, durch die eine Geräuschreduzierung beim Erreichen zumindest einer Endposition erzielt wird.

Eine Teilansicht der Schwenkvorrichtung 11"' ist schließlich in Fig. 8f dargestellt. Die Schwenkvorrichtung 11'" weist eine U-förmig ausgebildete Fußstütze 31'" auf. Die Fußstütze 31'" ist gleichzeitig zur Verstellung der Fahrzeugsitzposition vorgesehen und kann teleskopartig ausgezogen werden. Zur Begrenzung der Verschiebbarkeit der Fußstütze 31'" in Richtung des Pfeils 130 sind an der Fußstütze 31'" Fußstützen-Endanschläge 132a, 132b angeordnet. Die Fußstützen-Endanschläge 132a, 132b sind verstellbar, beispielsweise durch Lösen jeweils einer Schraube, an der Fußstütze 31'" angeordnet. Je nach Größe des Fahrzeugsitzes kann die Verschiebbarkeit der Fußstütze 31'" daher so eingestellt werden, dass die Fußstütze 31'" nicht vollständig unter den Fahrzeugsitz geschoben werden kann. Ein Benutzer kann daher stets auf die Fußstütze 31"' zugreifen. Weiterhin können die Fußstützen-Endanschläge 132a, 132b so an der Fußstütze 31"' angeordnet werden, dass die Fußstütze 31"' stets eine Fußbreite über einen auf der Schwenkvorrichtung 11'" montierten Fahrzeugsitz hinaussteht, sodass ein Benutzer jederzeit seine Füße auf die Fußstütze 31"' aufstellen kann.

Eine vierte erfindungsgemäße Schwenkvorrichtung 11"' mit einem elektrischen Antrieb 80"' ist in teilweise transparenter Darstellung in Fig. 9a gezeigt. Die Schwenkvorrichtung 11"" weist ein kreisbogenabschnittförmiges Führungselement 86"" mit einer Verzahnung auf. Das Führungselement 86"" wird durch eine Führungsvorrichtung 134 geführt. Die Führungsvorrichtung 134 weist eine Nut 136 auf, durch die eine Bewegung nach oben, nach unten und in Richtung eines in das Führungselement 86"" eingreifenden Zahnrades 138 des Antriebs 80"' begrenzt wird.

Die Schwenkvorrichtung 11"' aus Fig. 9a ist in Fig. 9b in einer Ansicht von unten dargestellt. Die Schwenkvorrichtung 11"' weist eine Notentriegelung 140 auf. Die Notentriegelung umfasst eine T-Griff-Schraube 142. Im Falle eines defekten elektrischen Antriebs 80"' oder einer defekten Steuerung des Antriebs 80"' kann die T-Griff-Schraube 142 von Hand herausgedreht werden. Bei herausgedrehter T-Griff-Schraube 142 kann der elektrische Antrieb 80"' verschoben werden. Das in Fig. 9a dargestellte Zahnrad 138 des elektrischen Antriebs 80"' befindet sich dann nicht mehr im Eingriff mit dem Führungselement 86"". Die Schwenkvorrichtung 11"' kann dann mitsamt einem auf der Schwenkvorrichtung 11"' montiertem Fahrzeugsitz von Hand in eine beliebige Position verschwenkt werden. Wird die T-Griff-Schraube 142 wieder eingedreht, wird der Fahrzeugsitz in dieser Position fixiert. Der Fahrzeugsitz kann auf diese Art und Weise auch bei einem ausgefallenen elektrischen Antrieb 80"" in einer Endposition, beispielsweise vollständig in das Fahrzeug eingeschwenkt, gesichert werden.

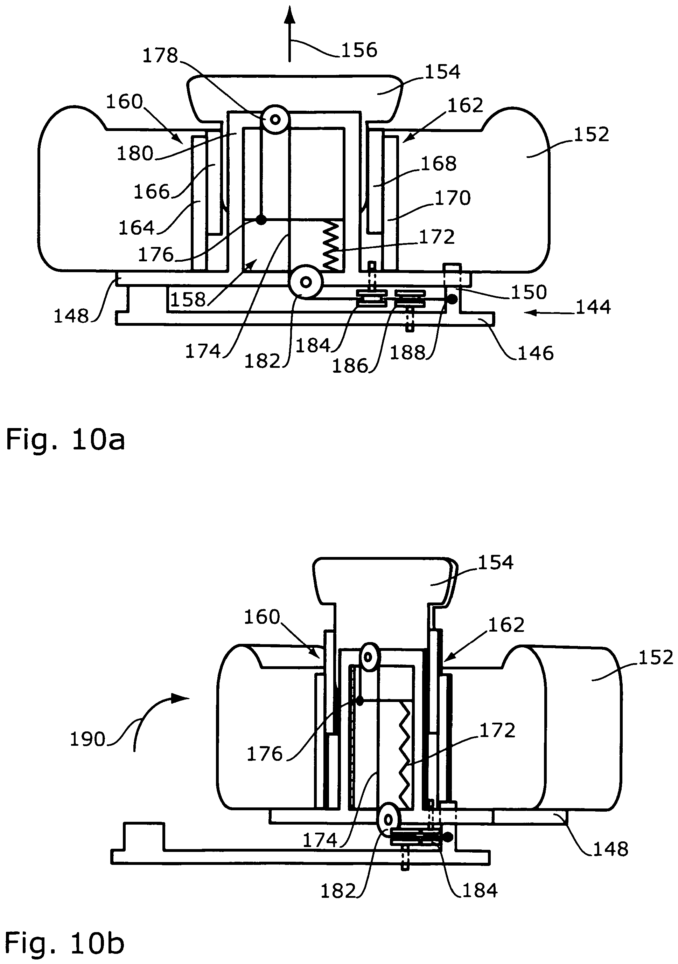

In Fig. 10a ist eine nicht beanspruchte Schwenkvorrichtung 144 dargestellt, die ein an einem Fahrzeug (nicht gezeigt) befestigbares Basiselement 146 und ein Schwenkelement 148 aufweist. Das Schwenkelement 148 ist über ein Drehlager 150 an dem Basiselement 146 drehbar gelagert. Alternativ dazu kann das Schwenkelement 148 über ein Drehlager an einem Zwischenelement drehbar gelagert sein. An dem Schwenkelement 148 ist ein Sitzteil 152 eines Fahrzeugsitzes (nicht gezeigt) befestigt. Das Sitzteil 152 ist dabei von einem Rückenteil (nicht gezeigt) des Fahrzeugsitzes getrennt. Während einer Ausschwenkbewegung des Schwenkelements 148 verbleibt daher das Rückenteil des Fahrzeugsitzes ortsfest im Fahrzeug. Um einen auf dem Sitzteil 152 sitzenden Benutzer (nicht gezeigt) während der Ausschwenkbewegung zu stützen, ist im hinteren Bereich des Sitzteils 152 eine Stütze 154 vorgesehen. Die Stütze 154 ist in Form einer Lendenwirbelstütze ausgebildet. Während der Ausschwenkbewegung wird die Stütze 154 nach oben, d. h. in Richtung eines Pfeils 156 bewegt. Je weiter das Sitzteil 152 ausgeschwenkt ist, umso mehr wird der Benutzer von der Stütze 154 gestützt.
Zum Bewegen der Stütze 154 ist eine Hubeinrichtung 158 vorgesehen. Die Hubeinrichtung 158 weist zwei Führungen 160, 162 in Form von Stangenführungen auf. Die Führungen 160, 162 weisen jeweils Stangen 164, 166, 168, 170 auf. Die Stangen 166, 168 sind begrenzt bewegbar mit der Stütze 154, die Stangen 164, 170 fest mit dem Schwenkelement 148 verbunden. Zwischen den Stangen 164 und 166 sowie zwischen den Stangen 168 und 170 sind jeweils mit Kugeln gelagerte Führungen vorgesehen. Durch die mit Kugeln gelagerten Führungen ist die Stange 166 leicht längsseitig der Stange 164 und die Stange 168 leicht längsseitig der Stange 170 verschiebbar.

Die Stütze 154 wird durch ein Federelement 172 in Form einer Zugfeder in der unteren, in Fig. 10a dargestellten Position gehalten. Um die Stütze 154 während der Ausschwenkbewegung des Sitzteils 152 und dem daran befestigten Schwenkelement 148 in Richtung des Pfeils 156 auszufahren, weist die Hubeinrichtung 158 einen Seilzug 174 auf. Der Seilzug 174 ist an seinem ersten Ende 176 an der Stütze 154 befestigt. Vom ersten Ende 176 ausgehend wird der Seilzug 174 wird über eine erste Rolle 178 umgelenkt, die an einem Bügel 180 der Hubeinrichtung 158 angeordnet ist und über eine zweite Rolle 182, sowie eine dritte Rolle 184, die beide an dem Schwenkelement 148 angeordnet sind, umgelenkt. Alle Rollen 178, 182, 184 stellen Umlenkungen dar.

Der Bügel 180 ist fest mit dem Schwenkelement 148 verbunden. Beim Ausschwenken des Schwenkelements 148 werden die erste Rolle 178, die zweite Rolle 182 und die dritte Rolle 184 gemeinsam mit dem Schwenkelement verschwenkt.

Der Seilzug 174 wird weiterhin um eine vierte Rolle 186 umgelenkt, die an dem Basiselement 146 angeordnet ist. Gemäß der Ansicht der Fig. 10a wird der Seilzug 174 hinter der dritten Rolle 184 und vor der vierten Rolle 186 geführt. Schließlich ist der Seilzug 174 an seinem zweiten Ende 188 an dem Basiselement 146 befestigt.

Fig. 10b zeigt das Sitzteil 152, das mit dem Schwenkelement 148 verbunden ist, nach einer Ausschwenkbewegung in Richtung eines Pfeils 190. Durch die Schwenkbewegung ist die dritte Rolle 184 aus ihrer ursprünglichen Position verschoben. Hierdurch ist der Seilzug 174 im Bereich zwischen der zweiten Rolle 182 und dem ersten Ende 176, das mit der Stütze 154 verbunden ist, verkürzt. Die Stütze 154 ist daher nach oben verschoben. Die Verschiebung erhöht dabei die Zugspannung des Federelements 172. Die Führungen 160, 162 führen die Stütze 154 in der dargestellten ausgefahrenen Position.

Zusammenfassend betrifft die Erfindung also einen Fahrzeugsitz mit einer Schwenkvorrichtung, die ein Basiselement, ein Zwischenelement und ein Schwenkelement aufweist. Das Schwenkelement ist relativ zum Zwischenelement drehbar durch ein Drehlager gelagert. Das Zwischenelement ist wiederrum linear relativ zum Basiselement verschiebbar. Durch einen Hebelmechanismus, der das Schwenkelement mit dem Basiselement verbindet, kann das Schwenkelement eine kombinierte Schwenkbewegung aus einer Linearbewegung und einer Drehbewegung ausführen. Eine Ausschwenkkurve des Schwenkelements kann sich dabei von einer Einschwenkkurve des Schwenkelements unterscheiden. Unterschiedliche Aus- und Einschwenkkurven können durch einen Hebelmechanismus realisiert werden, bei dem zumindest ein Hebel ein Langloch aufweist, in den ein Bolzen des Hebelmechanismus eingreift. Am Fahrzeugsitz kann ferner zumindest ein Gelenkarm vorgesehen sein, durch den ein Sitzteil des Fahrzeugsitzes anhebbar ist. Mittels eines derart ausgebildeten Fahrzeugsitzes kann ein körperlich beeinträchtigter Benutzer sehr einfach aus einem Fahrzeug aus- bzw. in ein Fahrzeug einsteigen.

## Patentansprüche

1. Fahrzeugsitz (10, 10"') mit einer Schwenkvorrichtung (11, 11', 11", 11"', 11"") zum Ausschwenken des Fahrzeugsitzes (10, 10"') aus einem Fahrzeug und Wiedereinschwenken in das Fahrzeug, mit einem Basiselement (12, 12', 12", 12"'), das mit dem Fahrzeug verbindbar ist, einem an dem Basiselement (12, 12', 12", 12"') linear geführten Zwischenelement (16, 16', 16", 16"') und einem am Zwischenelement (16, 16', 16", 16'") durch ein Drehlager (22, 22', 22") drehbar gelagerten Schwenkelement (20, 20', 20", 20"`), an dem ein Sitzteil (24, 24'") des Fahrzeugsitzes (10, 10"') befestigt ist, wobei zwischen dem Basiselement (12, 12', 12", 12"') und dem Schwenkelement (20, 20', 20", 20"') ein
Hebelmechanismus (32, 32', 32", 32"') angeordnet ist, mit dem die Linearbewegung zwischen Basiselement (12, 12', 12", 12"') und Zwischenelement (16, 16', 16", 16"') und die Drehbewegung des Schwenkelements (20, 20', 20", 20"') steuerbar sind, **dadurch gekennzeichnet, dass** der Hebelmechanismus (32, 32', 32", 32"') derart ausgebildet ist, dass eine Ausschwenkkurve, auf der sich das Schwenkelement (20, 20', 20", 20"') beim Ausschwenken aus dem Fahrzeug bewegt, anders als eine Einschwenkkurve, auf der sich das Schwenkelement (20, 20', 20", 20"') beim Einschwenken in das Fahrzeug bewegt, verläuft.

2. Fahrzeugsitz nach Anspruch 1, **dadurch gekennzeichnet, dass** zumindest ein Hebel (34, 34', 34") des Hebelmechanismus (32, 32', 32", 32"') ein Langloch (38, 38', 38") aufweist, in dem ein Bolzen (40, 40', 40") des Hebelmechanismus (32, 32', 32", 32"') geführt ist, der am Basiselement (12, 12', 12", 12"'), Zwischenelement (16, 16', 16", 16"') oder Schwenkelement (20, 20', 20", 20"') befestigt ist.

3. Fahrzeugsitz nach Anspruch 2, **dadurch gekennzeichnet, dass** das Langloch (38, 38', 38") winkelförmig ausgebildet ist.

4. Fahrzeugsitz nach Anspruch 3, **dadurch gekennzeichnet, dass** die beiden Winkelabschnitte (44, 44', 44", 46, 46', 46") des Langlochs (38, 38', 38") im Wesentlichen senkrecht zueinander verlaufen.

5. Fahrzeugsitz nach einem der Ansprüche 3 oder 4, **dadurch gekennzeichnet, dass** ein erster Winkelabschnitt (44, 44', 44") des Langlochs (38, 38', 38") kürzer ausgebildet ist als ein zweiter Winkelabschnitt (46, 46', 46").

6. Fahrzeugsitz nach einem der vorhergehenden Ansprüche, **dadurch gekennzeichnet, dass** der Hebelmechanismus (32, 32', 32", 32'"), insbesondere zwischen dem Basiselement (12, 12', 12", 12"'), Zwischenelement (16, 16', 16", 16'") oder Schwenkelement (20, 20', 20", 20"') und einem Hebel (34, 34', 34", 76) des Hebelmechanismus (32, 32', 32", 32'"), zumindest eine Feder aufweist.

7. Fahrzeugsitz nach einem der vorhergehenden Ansprüche, **dadurch gekennzeichnet, dass** das Basiselement (12, 12', 12", 12"'), das Zwischenelement (16, 16', 16", 16"') und/oder das Schwenkelement (20, 20', 20", 20'") im Wesentlichen plattenförmig ausgebildet sind.

8. Fahrzeugsitz nach einem der vorhergehenden Ansprüche, **dadurch gekennzeichnet, dass** das Drehlager (22, 22', 22") in einem Eckbereich des Schwenkelements (20, 20', 20", 20"') und/oder Zwischenelements (16, 16', 16", 16'") angeordnet ist.

9. Fahrzeugsitz nach einem der vorhergehenden Ansprüche, **dadurch gekennzeichnet, dass** im Drehlager (22, 22', 22") eine Kabelführung vorgesehen ist.

10. Fahrzeugsitz nach einem der vorhergehenden Ansprüche, **dadurch gekennzeichnet, dass** zwischen Schwenkelement (20, 20', 20", 20"' und Zwischenelement (16, 16', 16", 16"') eine Kugelabstützung (88) vorgesehen ist.

11. Fahrzeugsitz nach einem der vorhergehenden Ansprüche, **dadurch gekennzeichnet, dass** die Schwenkvorrichtung (11, 11', 11"), insbesondere zwischen dem Schwenkelement (20, 20', 20") und dem Zwischenelement (16, 16', 16"), zumindest einen Stützkeil (90) aufweist.

12. Fahrzeugsitz nach einem der vorhergehenden Ansprüche, **dadurch gekennzeichnet, dass** ein Seilzug (62) zur Entriegelung der Schwenkvorrichtung (11') vorgesehen ist.

13. Fahrzeugsitz nach einem der vorhergehenden Ansprüche, **dadurch gekennzeichnet, dass** ein elektrischer Antrieb (80, 80"") der Schwenkvorrichtung (11, 11", 11"") vorgesehen ist, bei dem eine Bewegung des Schwenkelements (20, 20") über ein kreisbogenabschnittförmiges Führungselement (86, 86"") mit einer Verzahnung erfolgt.

14. Fahrzeugsitz nach einem der vorhergehenden Ansprüche, **dadurch gekennzeichnet, dass** eine, insbesondere teleskopartig ausziehbare, Fußstütze (31, 31"') vorgesehen ist, wobei die Fußstütze (31, 31'") zur Verstellung des Fahrzeugsitzes (10), insbesondere zur Verstellung der Fahrzeugsitzposition, einsetzbar ist.

15. Fahrzeugsitz nach einem der vorhergehenden Ansprüche, **dadurch gekennzeichnet, dass** das Sitzteil (24, 24'") über mindestens einen Gelenkarm (102a, b) an einem Ende, insbesondere an einem hinteren Ende (114), anhebbar ist.

## Claims

1. Vehicle seat (10, 10"') with a swivelling device (11, 11', 11 ", 11"', 11'") for swivelling the vehicle seat (10, 10"') out of a vehicle and back into the vehicle, comprising a base element (12, 12', 12", 12"') which is connectable to the vehicle, an intermediate element (16, 16', 16", 16"') which is guided linearly on the base element (12, 12', 12", 12"') and a swivel element (20, 20', 20", 20"') which is mounted rotatably on the intermediate element (16, 16', 16", 16"') by means of a pivot bearing (22, 22', 22") and to which a seat part (24, 24"') of the vehicle seat (10, 10"') is fastened, wherein a lever mechanism (32, 32', 32", 32"') is arranged between the base element (12, 12', 12", 12"') and the swivel element (20, 20', 20", 20"'), with which lever mechanism (32, 32', 32", 32"') the linear movement between base element (12, 12', 12", 12"') and intermediate element (16, 16', 16", 16'") and the rotary movement of the swivel element (20, 20', 20", 20"') are controllable, **characterised in that** the lever mechanism (32, 32', 32", 32"') is so configured that a swivelling-out curve on which the swivel element (20, 20', 20", 20"') moves when swivelling out of the vehicle follows a different path to a swivelling-in curve on which the swivel element (20, 20', 20", 20"') moves when swivelling into the vehicle.

2. Vehicle seat according to Claim 1, **characterised in that** at least one lever (34, 34', 34") of the lever mechanism (32, 32', 32", 32"') has a slot (38, 38', 38") in which a pin (40, 40', 40") of the lever mechanism (32, 32', 32", 32"') is guided, which pin (40, 40', 40") is fastened to the base element (12, 12', 12", 12"'), intermediate element (16, 16', 16", 16"') or swivel element (20, 20', 20", 20"'),.

3. Vehicle seat according to Claim 2, **characterised in that** the slot (38, 38', 38") has an angled configuration.

4. Vehicle seat according to Claim 3, **characterised in that** the two angle portions (44, 44', 44", 46, 46', 46") of the slot (38, 38', 38") are disposed substantially perpendicular to one another.

5. Vehicle seat according to either of Claims 3 and 4, **characterised in that** a first angle portion (44, 44', 44") of the slot (38, 38', 38") is configured to be shorter than a second angle portion (46, 46', 46").

6. Vehicle seat according to any one of the preceding claims, **characterised in that** the lever mechanism (32, 32', 32", 32"'), has at least one spring, in particular between the base element (12, 12', 12", 12"'), intermediate element (16, 16', 16", 16"') or swivel element (20, 20', 20", 20"') and a lever (34, 34', 34", 76) of the lever mechanism (32, 32', 32", 32"').

7. Vehicle seat according to any one of the preceding claims, **characterised in that** the base element (12, 12', 12", 12"'), the intermediate element (16, 16', 16", 16"') and/or the swivel element (20, 20', 20", 20"') has/have a substantially plate-like configuration.

8. Vehicle seat according to any one of the preceding claims, **characterised in that** the pivot bearing (22, 22', 22") is arranged in a corner region of the swivel element (20, 20', 20", 20"') and/or of the intermediate element (16, 16', 16" 16"').

9. Vehicle seat according to any one of the preceding claims, **characterised in that** a cable guide is provided in the pivot bearing (22, 22', 22").

10. Vehicle seat according to any one of the preceding claims, **characterised in that** a spherical support (88) is provided between swivel element (20, 20', 20", 20"') and intermediate element (16, 16', 16", 16'").

11. Vehicle seat according to any one of the preceding claims, **characterised in that** the swivelling device (11, 11', 11") has at least one support wedge (90), in particular between the swivel element (20, 20', 20") and the intermediate element (16, 16', 16").

12. Vehicle seat according to any one of the preceding claims, **characterised in that** a cable control (62) is provided to unlock the swivelling device (11').

13. Vehicle seat according to any one of the preceding claims, **characterised in that** an electric drive (80, 80"") of the swivelling device (11, 11", 11'") is provided, whereby a movement of the swivel element (20, 20") is performed by means of a toothed arcuate guide element (86, 86"").

14. Vehicle seat according to any one of the preceding claims, **characterised in that** a foot support (31, 31"') is provided, which foot support (31, 31"') is, in particular, telescopically extendable and can be used to adjust the vehicle seat (10), in particular to adjust the vehicle seat position.

15. Vehicle seat according to any one of the preceding claims, **characterised in that** the seat part (24, 24"') can be raised at one end, in particular at a rear end (114), by means of at least one articulated arm (102a, b).

## Revendications

1. Siège de véhicule (10, 10"') comportant un dispositif de pivotement (11, 11', 11", 11"', 11"") pour sortir par pivotement le siège de véhicule (10, 10"') hors d'un véhicule et le rentrer par pivotement dans le véhicule, comportant un élément de base (12, 12', 12", 12"') susceptible d'être relié au véhicule, un élément intermédiaire (16, 16', 16", 16"') guidé linéairement sur l'élément de base (12, 12', 12", 12"') et un élément de pivotement (20, 20', 20", 20"') qui est monté en rotation par un palier rotatif (22, 22', 22") sur l'élément intermédiaire (16, 16', 16", 16"') et sur lequel est fixée une assise (24, 24'") du siège de véhicule (10, 10"'),
dans lequel un mécanisme à levier (32, 32', 32", 32"') est agencé entre l'élément de base (12, 12', 12", 12"') et l'élément de pivotement (20, 20', 20", 20"') et permet de commander le mouvement linéaire entre l'élément de base (12, 12', 12", 12"') et l'élément intermédiaire (16, 16', 16", 16"') et le mouvement de rotation de l'élément de pivotement (20, 20', 20", 20"'), **caractérisé en ce que**
le mécanisme à levier (32, 32', 32", 32"') est réalisé de telle sorte qu'une courbe de pivotement sortant sur laquelle l'élément de pivotement (20, 20', 20", 20"') se déplace pendant le pivotement hors du véhicule s'étend d'une autre manière qu'une courbe de pivotement rentrant sur laquelle l'élément de pivotement (20, 20', 20", 20"') se déplace pendant le pivotement jusque dans le véhicule.

2. Siège de véhicule selon la revendication 1, **caractérisé en ce qu'**au moins un levier (34, 34', 34") du mécanisme à levier (32, 32', 32", 32"') présente un trou oblong (38, 38', 38") dans lequel est guidé un goujon (40, 40', 40") du mécanisme à levier (32, 32', 32", 32"'), qui est fixé sur l'élément de base (12, 12', 12", 12"'), sur l'élément intermédiaire (16, 16', 16", 16"') ou sur l'élément de pivotement (20, 20', 20", 20"').

3. Siège de véhicule selon la revendication 2, **caractérisé en ce que** le trou oblong (38, 38', 38") est réalisé sous forme d'équerre.

4. Siège de véhicule selon la revendication 3, **caractérisé en ce que** les deux portions en équerre (44, 44', 44", 46, 46', 46") du trou oblong (38, 38', 38") s'étendent sensiblement perpendiculairement l'une à l'autre.

5. Siège de véhicule selon l'une des revendications 3 ou 4, **caractérisé en ce qu'**une première portion en équerre (44, 44', 44") du trou oblong (38, 38', 38") est réalisée plus courte qu'une seconde portion en équerre (46, 46', 46").

6. Siège de véhicule selon l'une des revendications précédentes, **caractérisé en ce que** le mécanisme à levier (32, 32', 32", 32"') comprend au moins un ressort en particulier entre l'élément de base (12, 12', 12", 12"'), l'élément intermédiaire (16, 16', 16", 16"') ou l'élément de pivotement (20, 20', 20", 20"') et un levier (34, 34', 34", 76) du mécanisme à levier (32, 32', 32", 32"').

7. Siège de véhicule selon l'une des revendications précédentes, **caractérisé en ce que** l'élément de base (12, 12', 12", 12"'), l'élément intermédiaire (16, 16', 16", 16"') et/ou l'élément de pivotement (20, 20', 20", 20"') sont réalisés sensiblement en forme de plaque.

8. Siège de véhicule selon l'une des revendications précédentes, **caractérisé en ce que** le palier de rotation (22, 22', 22") est agencé dans une zone de coin de l'élément de pivotement (20, 20', 20", 20"') et/ou de l'élément intermédiaire (16, 16', 16", 16'").

9. Siège de véhicule selon l'une des revendications précédentes, **caractérisé en ce qu'**un guidage de câble est prévu dans le palier de rotation (22, 22', 22").

10. Siège de véhicule selon l'une des revendications précédentes, **caractérisé en ce qu'**un support à bille (88) est prévu entre l'élément de pivotement (20, 20', 20", 20"') et l'élément intermédiaire (16, 16', 16", 16"').

11. Siège de véhicule selon l'une des revendications précédentes, **caractérisé en ce que** le dispositif de pivotement (11, 11', 11 ") comprend au moins un coin de support (90) en particulier entre l'élément de pivotement (20, 20', 20") et l'élément intermédiaire (16, 16', 16").

12. Siège de véhicule selon l'une des revendications précédentes, **caractérisé en ce qu'**il est prévu un câble de commande (62) pour déverrouiller le dispositif de pivotement (11').

13. Siège de véhicule selon l'une des revendications précédentes, **caractérisé en ce qu'**il est prévu un entraînement électrique (80, 80"") du dispositif de pivotement (11, 11", 11'") par lequel il se produit un mouvement de l'élément de pivotement (20, 20") via un élément de guidage (86, 86"") en forme de portion en arc de cercle pourvue d'une denture.

14. Siège de véhicule selon l'une des revendications précédentes, **caractérisé en ce qu'**il est prévu un repose-pied (31, 31"') étirable en particulier de façon télescopique, le repose-pied (31, 31'"') pouvant être utilisé pour régler le siège de véhicule (10), en particulier la position du siège de véhicule.

15. Siège de véhicule selon l'une des revendications précédentes, **caractérisé en ce que** l'assise (24, 24"') est susceptible d'être soulevée à une extrémité, en particulier à une extrémité arrière (114), par au moins un bras articulé (102a, b).
